# DEMANDE DE BREVET EUROPEEN

(11) **EP 3 375 513 A1**
(43) Date de publication de la demande: **19.09.2018**
(21) Numéro de dépôt: 18161828.1
(22) Date de dépôt: 14.03.2018
(51) Int. Cl.: B01J 12/00, B01J 38/02, B01J 38/04, B01J 23/94, B01J 19/24, B01J 8/02, B01J 23/89, C01B 3/12, C01B 3/16

(54) **CATALYSEUR POUR REACTION DE GAZ A L'EAU INVERSE (RWGS), REACTION RWGS ASSOCIEE ET PROCEDE DE REGENERATION IN-SITU DU CATALYSEUR**

(30) Priorité: 16.03.2017 FR 1752139
(71) Demandeur: Commissariat à l'Energie Atomique et aux Energies Alternatives, 75015 Paris (FR)
(72) Inventeur: BAURENS, Pierre, 38940 ROYBON (FR); BORGARD, Jean-Marc, 91400 ORSAY (FR); ZNAIGUIA, Raja, 38000 GRENOBLE (FR)
(74) Mandataire: Nony

(57) **Abrégé**

L'invention concerne un procédé de production d'un gaz de synthèse par mise en oeuvre de la réaction de gaz à l'eau inverse (RWGS) selon laquelle un mélange gazeux comprenant du dioxyde de carbone et de l'hydrogène est mis en contact avec un catalyseur, le catalyseur comprenant une phase active en alliage de fer, de cérium et d'argent (Fe-Ce-Ag) et le cas échéant contenant du cuivre (Fe-Ce-Ag-Cu), et un support à base d'alumine, en zéolite, en oxyde de zirconium (ZrO2) ou en silice (SiO2), dans lequel la phase active est imprégnée, les constituants de la phase active ayant les pourcentages en masse suivants:

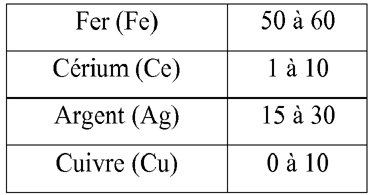

## Description

### Domaine technique

La présente invention concerne le domaine des procédés de production de gaz de synthèse comprenant du monoxyde de carbone (CO).

L'invention concerne plus particulièrement un nouveau catalyseur pour la mise en oeuvre de la réaction catalytique dite de gaz à l'eau inverse (acronyme anglais RWGS pour « *reverse water gas shift* ») en vue de produire un gaz de synthèse, dans laquelle un mélange gazeux comprenant du dioxyde de carbone (CO₂) et de l'hydrogène (H₂) est mis en contact avec le catalyseur, afin de produire du monoxyde de carbone et de l'eau.

### Etat de la technique

La réaction du gaz à l'eau inverse (RWGS) est la réaction chimique de conversion du CO₂ et de l'hydrogène (H₂) en monoxyde de carbone (CO) et en eau. La réaction de RWGS est réversible et endothermique, exprimé par l'équation suivante :

CO₂ + H₂ ↔ CO + H₂O. *Δ*H=41 kJ/mol

La réaction RWGS est reconnue comme une voie très prometteuse de valorisation du dioxyde de carbone et fait l'objet de nombreuses études. Les gaz qu'elle génère, notamment le monoxyde de carbone, permettent de synthétiser divers produits tels que par exemple le méthanol.

Cette réaction est largement utilisée et depuis longtemps dans le sens contraire selon une réaction dite de gaz à l'eau (acronyme anglais WGS pour «Water Shift Gas ») dans les procédés d'épuration de produit gazeux (hydrogène en général) de la pétrochimie. Depuis une vingtaine d'années, elle fait l'objet d'études en particulier pour apporter une production supplémentaire de CO en sortie de réacteur de vaporeformage de gaz naturel dans l'objectif de réaliser des alcools et carburants de synthèse à partir de gaz naturel.

Dans ce cadre ou pour d'autres applications, la réaction RWGS peut être effectuée en milieu homogène sans catalyseur à des températures très élevées, typiquement de 800 à 1200°C.

En pratique, cette réaction est généralement effectuée à des températures plus basses, typiquement de 500 à 600°C, en présence d'un catalyseur solide et ce afin de descendre la température de fonctionnement du procédé et donc son coût d'investissement, aussi connu sous l'acronyme anglais CAPEX pour « CAPital EXpenditure », et d'exploitation, aussi connu sous l'acronyme anglais OPEX pour «OPerational EXpenditure».

De manière générale, l'utilisation d'un catalyseur implique de résoudre les problèmes suivants:
- garantir un niveau élevé d'activité du catalyseur, afin de minimiser les quantités de catalyseur à mettre en oeuvre pour une production de réactif donné ;
- obtenir un bon rendement de production, afin de minimiser la taille du réacteur et le nombre de cycles du procédé, les deux étant source de coûts et de perte d'énergie ;
- assurer une sélectivité forte au produit recherché, c'est-à-dire ne pas produire trop de produits parasites à partir du réactif, afin de ne pas avoir à effectuer une épuration coûteuse de ces produits parasites ;
- obtenir une vitesse de désactivation la plus faible possible, et une régénération aisée du catalyseur pour limiter le coût d'exploitation du procédé. En effet, la régénération du catalyseur se fait en général à plus haute température que celle du procédé catalytique et nécessite parfois d'être mise en oeuvre en dehors du réacteur catalytique.

La réaction catalytique de RWGS a comme problématique intrinsèque le fait que le rendement de conversion est une fonction croissante de la température, et ce, contrairement aux coûts d'investissement (CAPEX) et celui d'exploitation (OPEX) du procédé complet, i.e. qui comprend l'étape de régénération du catalyseur, qui augmentent fortement avec la température.

La désactivation du catalyseur tend à rendre de moins en moins productive, la réaction RWGS et à provoquer, à un instant donné, l'arrêt de cette dernière, afin de pouvoir effectuer le changement de catalyseur et/ou sa régénération. Cette dernière se fait par apport temporaire soit d'oxygène, soit de vapeur d'eau ou d'hydrogène.

Deux phénomènes distincts peuvent conduire à cette désactivation du catalyseur.

Tout d'abord, le carbone se dépose au fur et à mesure sur le catalyseur et vient ainsi soit obturer ses pores, soit englobant les cristallites de la phase active du catalyseur, ou encore les détacher de leur phase support. De ce fait, le catalyseur devient moins accessible aux réactifs. Ce dépôt de carbone provient de plusieurs réactions possibles, fonction des concentrations des réactifs incriminés, en particulier CO et H₂O. La nature du dépôt de carbone et son évolution dans le temps dépendent des conditions de température et des compositions de l'atmosphère de la réaction RWGS. Selon le type de carbone déposé, il est plus ou moins difficile de l'enlever lors de la phase de régénération du catalyseur, et les températures nécessaires à la combustion du dépôt de carbone sur le catalyseur sont plus ou moins élevées. Les températures nécessaires peuvent aller jusqu'à être plus élevées que celles mises en oeuvre dans la réaction RWGS. Cela implique un déchargement du catalyseur, et sa régénération en dehors du réacteur catalytique avant son rechargement, ou encore une conception du procédé permettant de monter à cette température de régénération qui va de pair avec une augmentation du CAPEX.

L'autre phénomène conduisant à la désactivation du catalyseur est le frittage ou la coalescence des cristallites de la phase active du catalyseur. Cette coalescence est fortement activée par la température, mais aussi par la nature des espèces adsorbées. Elle est plus ou moins forte selon la nature des cristallites et le matériau sur lequel ces dernières sont déposées dans le cas des catalyseurs supportés.

Les catalyseurs les plus utilisés à ce jour et les plus efficaces pour la réaction RWGS sont des catalyseurs solides à base de cuivre. En effet, la démarche initiale a été d'utiliser des matériaux déjà employés traditionnellement dans la réaction inverse de WGS, c'est-à-dire des oxydes de cuivre et de zinc, utilisés pour les étapes finales d'épuration des gaz issus de la réaction WGS, mises en oeuvre à basse température, typiquement inférieures à 300°C.

Le brevet EP 0742172 décrit également l'utilisation de catalyseurs à base d'oxyde de cuivre-zinc, ou à base de fer-chrome, déjà utilisés pour les premiers étages d'une réaction WGS à plus haute température, typiquement entre 400 et 500°C. Ces catalyseurs ont pour inconvénient de se désactiver au bout d'un certain temps, notamment dans les conditions opératoires favorisant la réaction RWGS, telles que par exemple des températures comprises entre 400 et 600°C et/ou une faible pression partielle d'eau, par exemple moins de 20 % molaire d'eau. Cette désactivation implique le remplacement ou la régénération du catalyseur, ce qui diminue le rendement et la rentabilité économique de la réaction RWGS.

En réalité, comme décrit dans le brevet FR2992954B1, les conditions de la réaction dans le sens direct RWGS ne sont pas les mêmes que dans le sens inverse WGS pour lequel ces catalyseurs ont été validés.

Ainsi, la plus faible pression partielle d'eau et la plus forte pression partielle de CO vont favoriser d'une part un dépôt de carbone plus important, ainsi que son évolution vers des formes de carbone, de type coke, plus difficiles à brûler lors de phase de régénération du catalyseur, et d'autre part des réactions parasites ou secondaires comme la production de méthane, celle-ci étant particulièrement activée avec les catalyseurs à base de fer car le fer catalyse bien à la fois les réactions de méthanation, et celles créant du dépôt de carbone.

Par conséquent, la perte de sélectivité en CO, la désactivation du catalyseur dans le temps et les conditions de sa régénération vont être critiques avec des catalyseurs utilisés usuellement dans les réactions WGS.

Ceci est aussi vrai pour les catalyseurs à base de cuivre qui ont en outre une très faible activité et ne peuvent pas être employés à haute température, i.e. au-delà de 270°C, sous peine de se désactiver rapidement par frittage et ceci encore plus vite dans les conditions de la réaction RWGS.

En résumé, les catalyseurs mis en oeuvre pour une réaction WGS présentent les lacunes suivantes si on les utilise dans une réaction inverse RWGS : faible activité, forte désactivation et faible sélectivité du fait de la fabrication non souhaitée de méthane.

Pour pallier ces inconvénients, trois approches distinctes ont été testées dans la littérature.

La première consiste à éviter l'emploi du fer et à éliminer in situ l'eau créée, ce qui permet de descendre à des températures relativement basses, typiquement inférieures à 520°C, tout en conservant un rendement de conversion élevé. La demande de brevet US2003/0113244 met en oeuvre une telle approche mais la solution divulguée pose le problème de la complexité du réacteur du fait de l'intégration près du milieu catalytique d'un milieu diffusant la vapeur d'eau vers une zone froide, et de la nature du milieu diffusant.

La deuxième approche consiste à supprimer le fer de la composition du catalyseur, au risque de perdre la bonne activité résultante de ce métal.

La demande WO 2009/000494 propose ainsi un catalyseur sans fer, qui contient essentiellement du chrome supporté par de l'alumine. Ce catalyseur a préalablement été « usé » (récupération) et régénéré sous hydrogène. Les résultats annoncés dans cette demande sont pour des températures supérieures à 500°C, avec pour un fonctionnement sur une durée de trois semaines, l'absence ou la très faible production de méthane et de dépôt de carbone. En réalité, l'activité catalytique du catalyseur divulgué est faible, même à des températures élevées de 600°C, ce qui implique une faible vitesse volumétrique horaire (VVH), qui est le rapport du débit des gaz réactifs sur le volume du réacteur, typiquement comprise entre 600 et 7000 h⁻¹. En outre, l'absence de carbone n'est pas réellement démontrée.

Enfin, la troisième possibilité consiste à conserver le fer dans la composition du catalyseur, pour garder ses atouts à savoir une bonne activité catalytique, et un faible coût, et l'allier à d'autres matériaux pour augmenter son activité catalytique et limiter la désactivation, en particulier liée au dépôt de carbone.

Le brevet FR 2992954B1 divulgue ainsi un catalyseur massif en alliage FeCeAg sui présente une activité catalytique meilleure que celle des catalyseurs Fe-Cr classiques en particulier en dessous de 500°C, mais surtout une désactivation apparente bien moins forte. Le catalyseur divulgué n'a pas été abordé sur l'ensemble des aspects. Ainsi, ni la sélectivité au méthane, ni le dépôt de carbone sous forme de coke, ni la régénération de ce catalyseur n'ont été réellement étudiés.

Il existe donc un besoin d'améliorer encore la réaction RWGS utilisant un catalyseur, notamment afin encore de diminuer la désactivation du catalyseur, de limiter le dépôt de carbone ou de privilégier le dépôt d'un carbone facile à oxyder et de permettre ainsi une régénération in situ du réacteur dans lequel est mis en oeuvre la réaction RWGS.

Le but de l'invention est de répondre au moins partiellement à ce besoin.

### Exposé de l'invention

Pour ce faire, l'invention a pour objet un procédé de production d'un gaz de synthèse par mise en oeuvre de la réaction de gaz à l'eau inverse (RWGS) selon laquelle un mélange gazeux comprenant du dioxyde de carbone et de l'hydrogène est mis en contact avec un catalyseur, le catalyseur comprenant une phase active en alliage de fer, de cérium et d'argent (Fe-Ce-Ag) et le cas échéant contenant du cuivre (Fe-Ce-Ag-Cu), et un support en alumine, zéolite ou oxyde de zirconium (ZrO₂) dans lequel la phase active est imprégnée, les constituants de la phase active ayant les pourcentages en masse suivants :

| | |
|---|---|
| Fer (Fe) | 50 à 60 |
| Cérium (Ce) | 1 à 10 |
| Argent (Ag) | 15 à 30 |
| Cuivre (Cu) | 0 à 10 |

Le catalyseur selon l'invention présente comme avantage majeur d'être réalisable par un procédé classique facilement industrialisable.

On peut ainsi imprégner des particules d'alumine par des nitrates des différents métaux, Fe, Ce, Ag et le cas échéant Cu en solution.

Le catalyseur selon l'invention peut avantageusement se désactiver très lentement et d'être régénérable à moins de 500°C, le dépôt de carbone responsable de la désactivation s'oxydant facilement.

Comparativement à l'état de l'art, et en particulier par rapport au brevet FR2992954 B1, les avantages du procédé selon l'invention sont nombreux parmi lesquels on peut citer:
- la possibilité d'avoir une température opératoire de la réaction RWGS, à moins de 500°C, de préférence à 450°C
- une augmentation de l'activité du catalyseur et donc un gain fort en masse de catalyseur;
- une augmentation de la masse de catalyseur active par volume de réacteur ;
- une activité immédiate du catalyseur permettant d'être au maximum de son activité dès les premiers instants de fonctionnement de la réaction, ce qui n'est pas le cas avec les catalyseurs métalliques purs tel par exemple que Fe-Ce-Ag, comme ceux décrits dans le brevet FR2992954B1 ;
- une facilité de régénération due à une nature du carbone déposée facilement oxydable ;
- une régénération in-situ efficace dans le réacteur de mise en oeuvre de la réaction RWGS, à la température nominale du procédé, de préférence vers 450°C, cette régénération in-situ permettant d'obtenir sensiblement les mêmes taux de conversion avant et après régénération ;
- un procédé global simplifié où la production du gaz de synthèse et la régénération du catalyseur se font dans le même appareil et dans des conditions de température proche et inférieures à 500°C.

Le support du catalyseur est de préférence en alumine gamma ou en MgO-Al₂O₃.

Selon une variante avantageuse, les constituants de la phase active ont les pourcentages en masse suivants :

| | |
|---|---|
| Fer (Fe) | 60 |
| Cérium (Ce) | 10 |
| Argent (Ag) | 30 |

Selon une autre variante avantageuse, les constituants de la phase active ont les pourcentages en masse suivants :

| | |
|---|---|
| Fer (Fe) | 50 |
| Cérium (Ce) | 10 |
| Argent (Ag) | 30 |
| Cuivre (Cu) | 10 |

Avantageusement, le catalyseur constitue un lit catalytique disposé dans un réacteur catalytique à lit fixe.

La réaction RWGS est de préférence réalisée à :
- une température comprise entre 400°C et 500°C, de préférence à environ 450°C, et/ou
- une pression comprise entre 1 et 20 bar, de préférence entre 1 et 5 bar.

L'invention a également pour objet l'utilisation du gaz de synthèse obtenu selon le procédé décrit précédemment pour synthétiser un hydrocarbure.

L'hydrocarbure peut être le méthanol, l'éther diméthylique ou une paraffine.

L'invention a encore pour objet un réacteur-échangeur catalytique, de type à lit fixe, destiné à être mis en oeuvre dans le procédé de production décrit précédemment, le réacteur comprenant au moins deux circuits de fluide, dont un circuit de circulation d'un fluide de caloporteur et un circuit de circulation des réactifs et dans les canaux duquel est disposé un lit fixe de catalyseur comprenant une phase active en alliage de fer, de cérium et d'argent (Fe-Ce-Ag) et le cas échéant contenant du cuivre (Fe-Ce-Ag-Cu), et un support en alumine, zéolite ou oxyde de zirconium (ZrO2) dans lequel la phase active est imprégnée, les constituants de la phase active ayant les pourcentages en masse suivants :

| | |
|---|---|
| Fer (Fe) | 50 à 60 |
| Cérium (Ce) | 1 à 10 |
| Argent (Ag) | 15 à 30 |
| Cuivre (Cu) | 0 à 10 |

Le catalyseur est constitué avantageusement d'une structure monolithique sous la forme d'un film déposé dans les canaux du circuit de circulation des réactifs.

L'invention a enfin pour objet un procédé de régénération du catalyseur in-situ du réacteur-échangeur décrit, selon lequel on fait circuler un caloporteur (huile ou sel fondu) à une température comprise entre 350 et 450°C dans le circuit de fluide caloporteur et simultanément on fait circuler de l'air ou un gaz neutre dans le circuit des réactifs, en l'absence de ces derniers.

Le gaz neutre peut être choisi parmi l'argon, l'hélium ou l'azote.

### Description détaillée

D'autres avantages et caractéristiques de l'invention ressortiront mieux à la lecture de la description détaillée d'exemples de mise en oeuvre de l'invention faite à titre illustratif et non limitatif en référence aux figures suivantes parmi lesquelles :
- la figure 1 illustre sous forme de courbes, l'évolution du taux de conversion du CO₂ et de la sélectivité en fonction du temps pour une réaction RWGS mise en oeuvre dans un réacteur-échangeur à lit fixe avec un catalyseur selon l'état de l'art et d'un réacteur-échangeur à lit fixe avec des catalyseurs selon l'invention;
- la figure 2 illustre sous forme de courbes, l'évolution de la masse du catalyseur en fonction de la température de régénération au sein d'un réacteur-échangeur à lit fixe avec un catalyseur selon l'état de l'art et d'un réacteur-échangeur à lit fixe avec des catalyseurs selon l'invention ;
- la figure 3 illustre sous forme de courbes, l'évolution du taux de conversion du CO₂ et de la sélectivité en fonction du temps pour une réaction RWGS mise en oeuvre dans un réacteur-échangeur à lit fixe avec un catalyseur selon l'invention, respectivement avant et après sa régénération.

Les inventeurs ont réalisé des exemples de catalyseur pour mettre en oeuvre une production de gaz de synthèse par réaction RWGS.

Exemple selon l'état de l'art : Cet exemple est relatif à un catalyseur massif FeCeAg comme selon l'enseignement du brevet FR2992954B1.

Les étapes successives sont réalisées comme suit :
- ço-précipitation à pH 8-9 d'un mélange des nitrates Fe(NO₃)₃, Ce(NO₃)₃ et Ag(NO₃) avec une solution NaOH 5M,
- maturation pendant une durée d'1 h ;
- décantation ;
- séchage à 80°C et broyage de sorte à obtenir des tailles de particules inférieures à 250µm ;
- calcination pendant 3h à 450°C.
- calcination pendant 8h à 600°C.
- tamisage des particules de sorte à ce que leur taille soit comprise entre 50 et 300µm.

Exemple 1 selon l'invention : Cet exemple est relatif à un catalyseur en alliage FeCeAg dans les proportions respectives 60/10/30 imprégné dans de l'alumine.

Les étapes successives sont réalisées comme suit :
- imprégnation d'une solution d'Al₂O₃ par une solution de Fe(NO₃)₃, Ce(NO₃)₃ et Ag(NO₃) ;
- agitation pendant 24h ;
- séchage à 80°C et broyage de sorte à obtenir des tailles de particules inférieures à 250µm ;
- calcination pendant 3h à 450°C ;
- calcination pendant 8h à 600°C ;
- tamisage des particules de sorte à ce que leur taille soit comprise entre 50 et 300µm.

Exemple 2 selon l'invention : Cet exemple est relatif à un catalyseur en alliage FeCuCeAg dans les proportions respectives 50/10/10/30 imprégné dans de l'alumine.

Les étapes successives sont réalisées comme suit :
- imprégnation d'une solution de Al₂O₃ par une solution de Fe(NO₃)₃, Cu(NO₃)₂, Ce(NO₃)₃ et Ag(NO₃) ;
- agitation pendant 24h ;
- séchage à 80°C et broyage de sorte à obtenir des tailles de particules inférieures à 250µm ;
- calcination pendant 3h à 450°C ;
- calcination pendant 8h à 600°C ;
- tamisage des particules de sorte à ce que leur taille soit comprise entre 50 et 300µm.

Ces exemples de catalyseurs obtenus sont alors déposés dans un réacteur-échangeur d'essai.

Ce réacteur d'essai comprend un circuit de fluide dédié à la circulation des réactifs et le circuit dédié usuellement à la circulation du caloporteur est remplacée par un chauffage par résistance électrique.

Le circuit de réactifs est ici constitué d'un cylindre de diamètre de l'ordre de 3,5 cm et de hauteur maximale égale à 21 cm. Chaque catalyseur a été déposé dans le cylindre. Chaque lit catalytique réactif n'occupe qu'une faible proportion de la hauteur du cylindre. Les quantités de catalyseur testés sont en général au nominal de 20 g, sauf pour le massique où elle vaut 5 g compte tenu de sa forte perte de charge.

Pour réaliser le dépôt de catalyseur dans le cylindre, on a fait au préalable une solution d'un liant organique contenant en suspension le catalyseur, sous la forme des fines particules de dimensions microniques comme indiqué ci-avant, i.e. entre 50 et 300 µm.

On trempe ensuite le réacteur dans la solution, puis on le retire, et on évacue ensuite le liant par une montée en température afin de l'évaporer.

On obtient ainsi un film, typiquement d'une dizaine de microns de particules de catalyseurs sur les parois des canaux de circulation des réactifs.

On procède alors à une calcination de sorte que le film acquière une cohésion et une adhérence par frittage des particules les unes avec les autres.

Les inventeurs ont procédé à des essais dans le réacteur d'essais contenant un lit fixe de 20 g de chaque exemple de catalyseur alimenté en mélange de réactifs H₂/CO₂, dans un rapport volumique, proche de la stoechiométrie de la réaction RWGS, i.e. de 3/1.

On précise que, dans ce réacteur, la température est mesurée au centre du lit catalytique et non en paroi. Compte tenu de la configuration du réacteur d'essais, elle est la température minimale dans le lit catalytique. Ainsi, il y a un gradient thermique interne entre la paroi, où la température est de l'ordre de 500°C (420-500°C), et le centre du lit catalytique, à 450°C. La pression est de 1.5 bar absolu.

La conversion du CO₂ est obtenue à partir des fractions volumiques de constituants carbonés autres que le CO₂ (CO, CH₄)) dans le gaz sortant mesurées à l'aide d'un micro-chromatographe à gaz, divisées par l'ensemble des fractions volumiques de produits carbonés sortant.

Le gaz de sortie contient au moins 28 % de CO et moins de 10% de CH₄, le reste étant CO₂ et H₂.

Pour une vitesse volumétrique horaire (VVH), qui est le rapport du débit des gaz réactifs sur le volume du réacteur, de l'ordre de 18000h⁻¹, la température opératoire est de 450°C, la pression d'alimentation du mélange de gaz réactifs est d'environ 1,5 bar.

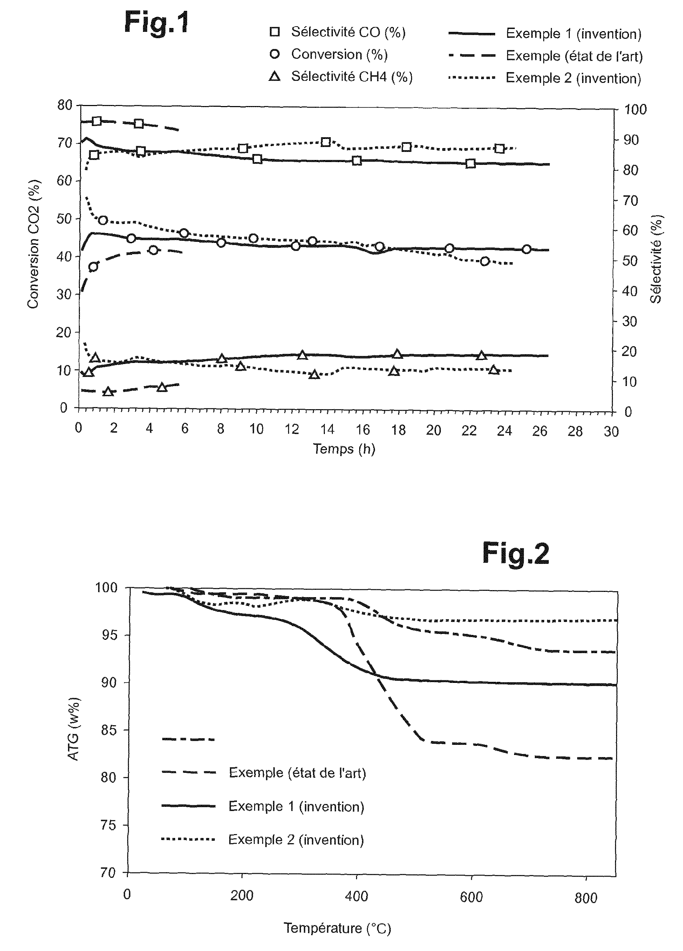

Les résultats du taux de conversion et de la sélectivité en CO en fonction du temps sont montrés sous forme de courbes en figure 1.

On constate qu'avec les exemples 1 et 2 de catalyseur selon l'invention, l'activité catalytique est immédiate, avec environ 42% du CO₂ qui est converti et surtout une activité dont la durée est considérablement augmentée comparativement à l'exemple selon l'état de l'art qui se désactive rapidement.

Les inventeurs ont ensuite procédé à des essais de régénération sur des catalyseurs ayant fonctionné pendant une trentaine d'heure en RWGS à une température de 450°C, sous une pression de 1,5 bar, et à une VVH de l'ordre de 18000h⁻¹.

Ces essais ont consisté en une analyse thermogravimétrique (ATG), afin de suivre la variation de masse de l'échantillon de chaque catalyseur, en envoyant un flux de gaz neutre et simultanément en élevant la température.

Le gaz neutre est préférentiellement de l'argon, et contient de l'oxygène O₂ dans une proportion volumique inférieure à 4% en volume.

L'analyse ATG permet de mesurer pour chaque catalyseur, à quelle température le carbone, initialement déposé sur le catalyseur lors de son fonctionnement, est brûlé et la quantité qui est brulée et ici surtout jusqu'à quelle température il faut monter pour être certain d'avoir dégagé tout le carbone et donc d'avoir régénéré le catalyseur afin qu'il puisse être réutilisé pour la mise en oeuvre de la réaction RWGS.

De la figure 2, il ressort que les exemples 1 et 2 selon l'invention de catalyseur présentent une fin de régénération à moins de 450°C, température qui correspond donc parfaitement à des températures relativement basses de mises en oeuvre de la réaction RWGS.

On a comparé l'évolution du taux de conversion et la sélectivité dans une réaction RWGS entre un catalyseur selon l'invention neuf et le même catalyseur selon l'invention ayant été utilisé puis régénéré in-situ.

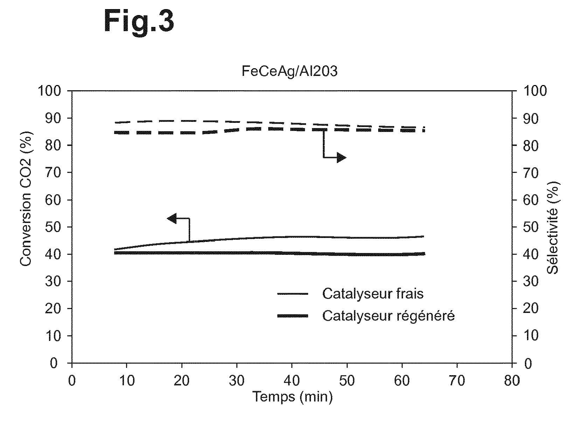

Ces comparaisons sont illustrées en figure 3, sur laquelle le catalyseur neuf est dénommé catalyseur frais. Il ressort clairement de cette figure 3 que la régénération in-situ est efficace, puisque la différence entre taux de conversion d'un catalyseur neuf, de l'ordre de 45%, et du même catalyseur régénéré, de l'ordre de 40% est faible.

De fait, cette différence entre ces taux de conversion du catalyseur neuf et régénéré in-situ selon l'invention, correspond à une valeur usuelle lorsqu'on réalise une régénération de catalyseurs. En effet, les catalyseurs ont une dégradation d'origine physique et une d'origine chimique. La dégradation physique est irréversible ou quasiment irréversible, ce qui induit la différence de taux de conversion constatée. On constate que la dégradation chimique peut être résorbée en partie pour un catalyseur selon l'invention ayant été régénéré in-situ au sein du réacteur.

Les exemples de catalyseur selon l'invention permettent donc d'envisager de réaliser une régénération in-situ des réacteurs-échangeurs de mise en oeuvre de la réaction RWGS.

Les réacteurs-échangeurs selon l'invention peuvent comporter des canaux des circuits qui sont en parois ou encore en nappes de plaques rainurées avec intercalage d'une nappe de caloporteur entre nappes de canaux réactifs, ou encore insérés dans un lit fixe.

Bien entendu, la présente invention n'est pas limitée aux variantes et aux modes de réalisation décrits fournis à titre d'exemples illustratifs et non limitatifs.

## Revendications

1. Procédé de production d'un gaz de synthèse par mise en oeuvre de la réaction de gaz à l'eau inverse (RWGS) selon laquelle un mélange gazeux comprenant du dioxyde de carbone et de l'hydrogène est mis en contact avec un catalyseur, le catalyseur comprenant une phase active en alliage de fer, de cérium et d'argent (Fe-Ce-Ag) et le cas échéant contenant du cuivre (Fe-Ce-Ag-Cu), et un support à base d'alumine, en zéolite, en oxyde de zirconium (ZrO₂) ou en silice (SiO₂), dans lequel la phase active est imprégnée, les constituants de la phase active ayant les pourcentages en masse suivants :
| | |
|---|---|
| Fer (Fe) | 50 à 60 |
| Cérium (Ce) | 1 à 10 |
| Argent (Ag) | 15 à 30 |
| Cuivre (Cu) | 0 à 10 |

2. Procédé de production d'un gaz de synthèse selon la revendication 1, dans lequel le support du catalyseur est en alumine gamma ou en MgO-Al₂O₃.

3. Procédé de production d'un gaz de synthèse selon la revendication 1 ou 2, dans lequel les constituants de la phase active ayant les pourcentages en masse suivants :
| | |
|---|---|
| Fer (Fe) | 60 |
| Cérium (Ce) | 10 |
| Argent (Ag) | 30 |

4. Procédé de production d'un gaz de synthèse selon la revendication 1 ou 2, dans lequel les constituants de la phase active ayant les pourcentages en masse suivants :
| | |
|---|---|
| Fer (Fe) | 50 |
| Cérium (Ce) | 10 |
| Argent (Ag) | 30 |
| Cuivre (Cu) | 10 |

5. Procédé de production d'un gaz de synthèse selon l'une quelconque des revendications précédentes, dans lequel le catalyseur constitue un lit catalytique disposé dans un réacteur catalytique à lit fixe.

6. Procédé de production d'un gaz de synthèse selon l'une quelconque des revendications précédentes, la réaction RWGS étant réalisée à une température comprise entre 400°C et 500°C, de préférence à environ 450°C.

7. Procédé de production d'un gaz de synthèse selon l'une quelconque des revendications précédentes, la réaction RWGS étant réalisée à une pression comprise entre 1 et 20 bar, de préférence entre 1 et 5 bar.

8. Utilisation du gaz de synthèse obtenu selon le procédé selon l'une des revendications 1 à 7 pour synthétiser un hydrocarbure.

9. Utilisation selon la revendication 8, dans laquelle l'hydrocarbure est le méthanol, l'éther diméthylique ou une paraffine.

10. Réacteur-échangeur catalytique, de type à lit fixe, destiné à être mis en oeuvre dans le procédé de production selon l'une quelconque des revendications 1 à 7, le réacteur comprenant au moins deux circuits de fluide, dont un circuit de circulation d'un fluide de caloporteur et un circuit de circulation des réactifs et dans les canaux duquel est disposé un lit fixe de catalyseur comprenant une phase active en alliage de fer, de cérium et d'argent (Fe-Ce-Ag) et le cas échéant contenant du cuivre (Fe-Ce-Ag-Cu), et un support en alumine, zéolite ou oxyde de zirconium (ZrO₂) dans lequel la phase active est imprégnée, les constituants de la phase active ayant les pourcentages en masse suivants :
| | |
|---|---|
| Fer (Fe) | 50 à 60 |
| Cérium (Ce) | 1 à 10 |
| Argent (Ag) | 15 à 30 |
| Cuivre (Cu) | 0 à 10 |

11. Réacteur-échangeur catalytique selon la revendication 10, dans lequel le catalyseur est constitué d'une structure monolithique sous la forme d'un film déposé dans les canaux du circuit de circulation des réactifs.

12. Procédé de régénération du catalyseur in-situ du réacteur-échangeur selon la revendication 10 ou 11, selon lequel on fait circuler de l'huile à une température comprise entre 350 et 450°C dans le circuit de fluide caloporteur et simultanément on fait circuler de l'air ou un gaz neutre dans le circuit des réactifs, en l'absence de ces derniers.

13. Procédé de régénération selon la revendication 12, le gaz neutre étant choisi parmi l'argon, l'hélium ou l'azote.
